# FASCICULE DE BREVET EUROPEEN

(11) **EP 4 542 063 B1**
(45) Date de publication et mention de la délivrance du brevet: **18.03.2026**
(21) Numéro de dépôt: 24205128.2
(22) Date de dépôt: 08.10.2024
(51) Int. Cl.: F16B 5/04, F16B 19/10, F16B 31/02, F16B 35/04, F16B 37/06

(54) **DISPOSITIF DE FIXATION DÉMONTABLE DE TYPE AVEUGLE, ASSEMBLAGE COMPORTANT AU MOINS UN TEL DISPOSITIF DE FIXATION ET PROCÉDÉ DE DÉMONTAGE D'UN TEL DISPOSITIF DE FIXATION**
LÖSBARE BLINDBEFESTIGUNGSVORRICHTUNG, ANORDNUNG MIT MINDESTENS EINER SOLCHEN BEFESTIGUNGSVORRICHTUNG UND VERFAHREN ZUM DEMONTIEREN EINER SOLCHEN BEFESTIGUNGSVORRICHTUNG
DISMOUNTABLE FASTENING DEVICE OF THE BLIND TYPE, ASSEMBLY COMPRISING AT LEAST ONE SUCH FASTENING DEVICE AND METHOD FOR DISASSEMBLING SUCH A FASTENING DEVICE

(30) Priorité: 18.10.2023 FR 2311261
(43) Date de publication de la demande: 23.04.2025
(73) Titulaire: AIRBUS OPERATIONS (S.A.S.), 31060 Toulouse (FR); Ateliers de la Haute -Garonne ETS Auriol et Cie, 31130 Flourens Cedex (FR)
(72) Inventeur: LAURENT, Jean-Noël, 17300 ROCHEFORT (FR); BIGOT, Julien, 31060 TOULOUSE (FR); FOULADOUX, Adrien, 44800 SAINT-HERBLAIN (FR); LE HENAFF, Perig, 17300 ROCHEFORT (FR); MAURICE, Arnaud, 17300 ROCHEFORT (FR); JEHENNE, Bertrand, 31130 FLOURENS (FR); GUTIERREZ, Lucas, 31130 FLOURENS (FR); MERIC, François, 31130 FLOURENS (FR)
(74) Mandataire: Fantin, Laurent

(56) Documents cités:
- EP-B1- 2 647 851
- WO-A1-2018/224793
- WO-A2-2012/142033

## Description

La présente demande se rapporte à un dispositif de fixation démontable de type aveugle, à un assemblage comportant au moins un tel dispositif de fixation ainsi qu'à un procédé de démontage d'un tel dispositif de fixation.

Selon un mode de réalisation visible sur les figures 1 à 3 et décrit dans le document EP2647851, un dispositif de fixation 10 de type aveugle, configuré pour maintenir assemblées des première et deuxième pièces 12, 14, comprend un corps tubulaire 16, un écrou expansible 18 ainsi qu'une vis 20. Les première et deuxième pièces assemblées 12, 14 comprennent chacune un trou traversant 12.1, 14.1, pour loger le corps tubulaire 16, et une surface d'appui 12.2, 14.2, la surface d'appui 12.2 de la première pièce 12 comprenant un chanfrein 12.3 autour du trou traversant 12.1.

Le corps tubulaire 16 comprend une partie principale 22 qui s'étend entre des première et deuxième extrémités 22.1, 22.2, une partie détachable 24 qui comprend une face latérale 24.1 de section transversale hexagonale ainsi qu'une zone de jonction sécable 26 reliant la partie principale 22 et la partie détachable 24. Le corps tubulaire 16 comprend un orifice traversant 28 sur toute sa longueur qui présente une réduction de diamètre 28.1 tronconique au droit de la deuxième extrémité 22.2 de la partie principale 22. La première extrémité 22.1 de la partie principale 22 comprend une forme tronconique évasée en direction de la deuxième extrémité 22.2. Le corps tubulaire 16 comprend, au niveau de la deuxième extrémité 22.2 de la partie principale 22, une tête tronconique 30 configurée pour se loger dans le chanfrein 12.3 de la première pièce 12 en fonctionnement.

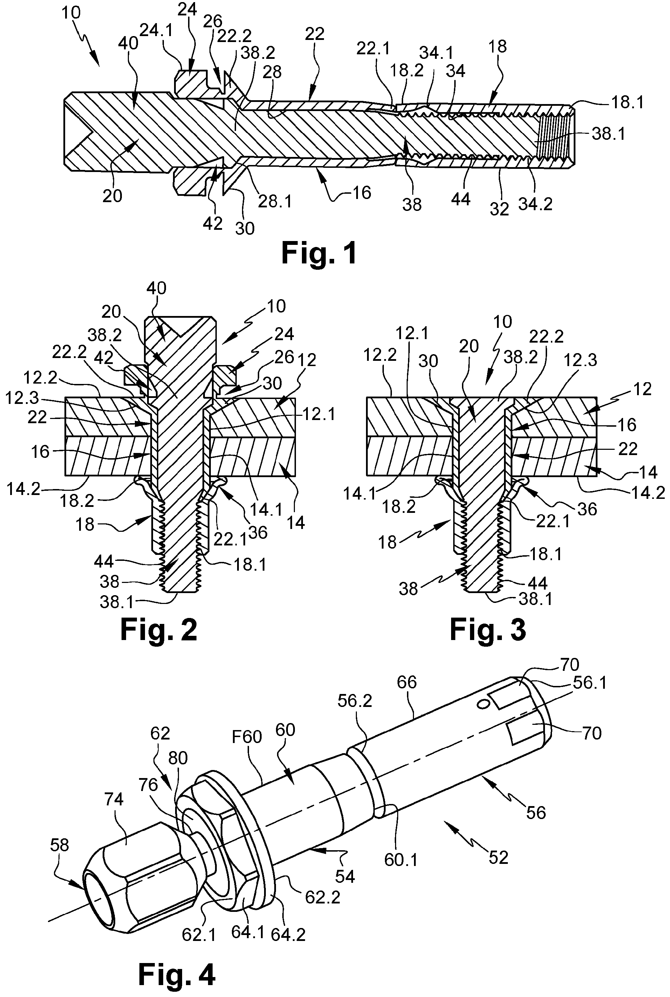

L'écrou expansible 18 s'étend entre des première et deuxième extrémités 18.1, 18.2, la deuxième extrémité 18.2 coopérant avec la première extrémité 22.1 de la partie principale 22 du corps tubulaire 16 en fonctionnement. L'écrou expansible 18 comprend une face latérale 32 initialement lisse ainsi qu'un trou traversant 34 qui relie les première et deuxième extrémités 18.1, 18.2. L'écrou expansible 18 peut se déformer et s'expanser de manière à former un bulbe 36 (visible sur les figures 2 et 3) prenant appui contre la surface d'appui 14.2 de la deuxième pièce 14 lorsque l'écrou expansible 18 est soumis à un effort de compression entre ses première et deuxième extrémités 18.1, 18.2.

Le trou traversant 34 présente un tronçon taraudé 34.2 à proximité de la première extrémité 18.1 de l'écrou expansible 18.

La vis 20 comprend une tige 38 qui s'étend entre des première et deuxième extrémités 38.1, 38.2, une tête 40 de section hexagonale pour visser la vis 20 ainsi qu'une zone de jonction sécable 42 reliant la tige 38 et la tête 40. La tige 38 comprend un tronçon fileté 44, qui s'étend à partir de la première extrémité 38.1, configuré pour coopérer avec le tronçon taraudé 34.2 de l'écrou expansible 18 et s'y visser. La deuxième extrémité 38.2 de la tige 38 comprend une forme tronconique configurée pour coopérer avec la réduction de diamètre 28.1 du corps tubulaire 16.

Le procédé de montage d'un tel dispositif de fixation comprend une étape d'insertion du dispositif dans les trous traversants 12.1, 14.1 des première et deuxième pièces 12, 14 à assembler depuis la surface d'appui 12.2 jusqu'à ce que la tête tronconique 30 du corps tubulaire 16 soit logée dans le chanfrein 12.3 de la première pièce 12. La première extrémité 22.1 de la partie principale 22 est située en saillie par rapport à la surface d'appui 14.2 de la deuxième pièce 14.

En suivant, la vis 20 est vissée, le corps tubulaire 16 étant immobilisé en rotation grâce à un outil qui coopère avec la partie détachable 24 du corps tubulaire 16. La forme tronconique de la deuxième extrémité 38.2 de la tige 38 de la vis 20 étant en butée contre la réduction de diamètre 28.1 du corps tubulaire 16, l'écrou expansible 18 est comprimé entre ses première et deuxième extrémités 18.1, 18.2, sa deuxième extrémité 18.2 étant en contact avec la première extrémité 22.1 de la partie principale 22 du corps tubulaire 16. Le vissage provoque alors l'expansion de l'écrou expansible 18 qui forme alors un bulbe 36. Lorsque ce dernier est formé, le vissage provoque un plaquage du bulbe 36 contre la surface d'appui 14.2 de la deuxième pièce 14. Dès lors, les première et deuxième pièces 12 et 14 sont comprimées entre le bulbe 36 et la tête tronconique 30 du corps tubulaire 16. Dès que le couple de serrage souhaité est atteint, la zone de jonction 42 se rompt dans un premier temps puis, sous l'effet d'un mouvement complémentaire de l'outil de pose, la zone de jonction sécable 26 se rompt dans un second temps. Le dispositif de fixation 10 est alors correctement serré. Comme illustré sur la figure 3, le corps tubulaire 16 et la vis 20 affleurent la surface d'appui 12.2 de la première pièce 12.

Ce mode de réalisation permet d'automatiser le montage avec un seul outil configuré pour bloquer en rotation le corps tubulaire 16 et visser la vis.

Pour démonter d'un tel dispositif de fixation, une solution consiste à détruire à l'aide d'un foret la forme tronconique de la deuxième extrémité 38.2 de la tige 38. Cette solution n'est pas satisfaisante car les risques d'endommagement de la surface d'appui 12.2 de la première pièce 12 sont importants du fait que le corps tubulaire 16 et la vis 20 affleurent ladite surface d'appui 12.2 de la première pièce 12. Selon un autre inconvénient, l'usinage de la vis 20 génère des débris qui polluent l'environnement s'ils ne sont pas collectés. Enfin, même si la forme tronconique de la deuxième extrémité 38.2 de la tige 38 est détruite, l'écrou expansible 18 peut rester lié au corps tubulaire 16 dans la mesure où la deuxième extrémité 18.2 de l'écrou expansible peut toujours être imbriquée sur la première extrémité 22.1 de la partie principale 22 du corps tubulaire 16.

La présente invention vise à remédier à tout ou partie des inconvénients de l'art antérieur.

A cet effet, l'invention a pour objet un dispositif de fixation permettant de maintenir assemblées au moins des première et deuxième pièces qui comportent chacune un trou traversant ainsi qu'une surface d'appui au niveau de laquelle débouche le trou traversant, ledit dispositif de fixation comportant un corps tubulaire, un écrou expansible ainsi qu'une vis. Le corps tubulaire est configuré pour se loger dans les trous traversants des première et deuxième pièces et s'étend entre des première et deuxième extrémités, la première extrémité du corps tubulaire coopérant avec l'écrou expansible, la deuxième extrémité du corps tubulaire présentant une tête configurée pour prendre appui contre la surface d'appui de la première pièce. L'écrou expansible s'étend entre des première et deuxième extrémités et présente au moins un tronçon taraudé et un axe de révolution, l'écrou expansible étant configuré pour s'expanser de manière à former un bulbe lorsqu'il est soumis à un effort de compression entre ses première et deuxième extrémités. La vis comporte une tige qui s'étend entre des première et deuxième extrémités et présente un axe de révolution ainsi qu'une face terminale au niveau de sa première extrémité, la tige comprenant un tronçon fileté qui coopère avec le tronçon taraudé de l'écrou expansible, la deuxième extrémité de la tige comprenant une forme élargie prenant appui contre le corps tubulaire.

Selon l'invention, la vis présente au moins une forme positionnée au niveau de la face transversale de la tige et configurée pour coopérer avec un premier outil afin d'immobiliser en rotation autour de son axe de révolution la vis par rapport au premier outil. En complément, l'écrou expansible comprend au moins une forme configurée pour coopérer avec un deuxième outil afin d'immobiliser en rotation autour de son axe de révolution l'écrou expansible par rapport au deuxième outil.

Cette solution ne génère aucun débris lors du démontage, réduit les risques d'endommagement des première et deuxième pièces et permet de désolidariser de manière sûre le corps tubulaire et l'écrou expansible. Ce dispositif de fixation permet un démontage des pièces assemblées sans risques d'endommagement si bien qu'il n'est pas nécessaire de ré-usiner les alésages des pièces assemblées.

Selon une autre caractéristique, l'écrou expansible comprend une face latérale reliant les première et deuxième extrémités de l'écrou expansible ainsi qu'au moins un méplat positionné sur la face latérale.

Selon une autre caractéristique, la face latérale comprend plusieurs méplats régulièrement répartis autour de l'axe de révolution de l'écrou expansible.

Selon une autre caractéristique, chaque méplat est positionné à proximité de la première extrémité de l'écrou expansible.

Selon une autre caractéristique, la tige comprend une empreinte, coaxiale à l'axe de révolution de la vis, qui débouche au niveau de la face transversale et présente un fond ainsi qu'une face latérale reliant le fond et la face transversale, la face latérale comportant au moins un méplat.

Selon une autre caractéristique, l'empreinte comprend plusieurs méplats régulièrement répartis autour de l'axe de révolution de la vis.

Selon une autre caractéristique, la tête est configurée pour permettre de l'immobiliser en rotation ou de l'entraîner en rotation avec un outil.

Selon une autre caractéristique, la tête du corps tubulaire s'étend entre des première et deuxième faces transversales, la deuxième face transversale étant configurée pour prendre appui contre la surface d'appui de la première pièce. En complément, la tête comprend un premier tronçon de section prismatique qui s'étend à partir de la première face transversale ainsi qu'un deuxième tronçon, qui s'étend entre le premier tronçon et la deuxième face transversale, de section supérieure à celle du premier tronçon.

L'invention a également pour objet un assemblage comportant au moins des première et deuxième pièces ainsi qu'au moins un dispositif de fixation selon l'une des caractéristiques précédentes afin de maintenir les première et deuxième pièces assemblées.

L'invention a également pour objet un procédé de démontage d'un dispositif de fixation selon l'une des caractéristiques précédentes. Ce procédé de démontage comprend une étape de dévissage d'un premier élément, parmi la vis et l'écrou expansible, par rapport à un deuxième élément différent du premier élément, parmi la vis et l'écrou expansible, en immobilisant en rotation le deuxième élément grâce à un premier outil et en faisant pivoter le premier élément grâce à un deuxième outil.

Selon une autre caractéristique, le procédé comprend une étape de dévissage de l'écrou expansible par rapport à la vis en immobilisant en rotation la vis grâce au premier outil, qui coopère avec l'empreinte de la vis, et en faisant pivoter l'écrou expansible grâce au deuxième outil qui coopère avec les méplats de l'écrou expansible.

Selon une autre caractéristique, préalablement à l'étape de dévissage de l'écrou expansible par rapport à la vis ou au début de cette étape de dévissage, le procédé de démontage comprend une étape de déblocage de l'écrou expansible par rapport au corps tubulaire en immobilisant en rotation le corps tubulaire grâce à un troisième outil, qui coopère avec la tête du corps tubulaire, et en faisant pivoter l'écrou expansible grâce au deuxième outil.

D'autres caractéristiques et avantages ressortiront de la description de l'invention qui va suivre, description donnée à titre d'exemple uniquement, en regard des dessins annexés parmi lesquels :
- La figure 1 est une coupe longitudinale d'un dispositif de fixation illustrant un mode de réalisation de l'art antérieur,
- La figure 2 est une coupe d'un assemblage comportant un dispositif de fixation en cours de montage illustrant un mode de réalisation de l'art antérieur,
- La figure 3 est une coupe d'un assemblage comportant un dispositif de fixation en fin de montage illustrant un mode de réalisation de l'art antérieur,
- La figure 4 est une vue en perspective selon un premier angle de vue d'un dispositif de fixation illustrant un mode de réalisation de l'invention,
- La figure 5 est une vue en perspective selon un deuxième angle de vue du dispositif de fixation visible sur la figure 4,
- La figure 6 est une vue en perspective du dispositif de fixation visible sur la figure 4 à l'état désassemblé,
- La figure 7 est une coupe d'un assemblage comportant un dispositif de fixation illustrant un mode de réalisation de l'invention,
- La figure 8 représente des coupes illustrant différentes étapes d'un procédé de démontage du dispositif de fixation visible sur la figure 4,
- La figure 9 est une coupe longitudinale d'un dispositif de fixation et d'un outillage de démontage illustrant une étape d'un procédé de démontage, et
- La figure 10 est une coupe longitudinale du dispositif de fixation et de l'outillage de démontage visibles sur la figure 9 illustrant une autre étape du procédé de démontage.

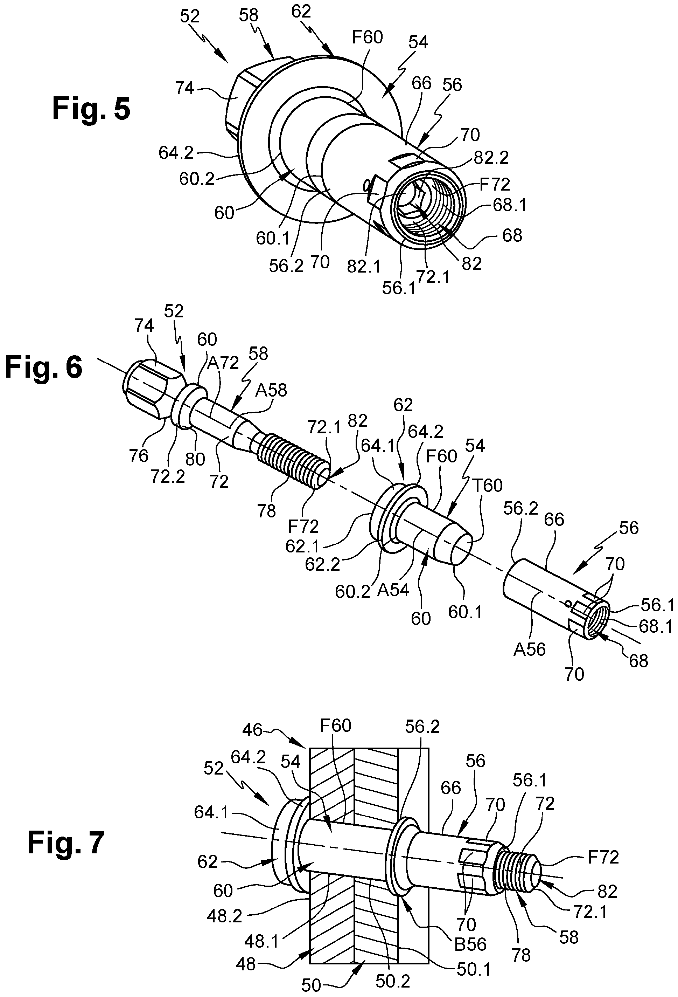

Selon un mode de réalisation visible sur la figure 7, un assemblage 46 comprend au moins des première et deuxième pièces 48, 50 ainsi qu'au moins un dispositif de fixation 52 maintenant les première et deuxième pièces assemblées 48, 50. Les première et deuxième pièces assemblées 48, 50 comprennent chacune un trou traversant 48.1, 50.1 ainsi qu'une surface d'appui 48.2, 50.2 au niveau de laquelle débouche le trou traversant 48.1, 50.1. La surface d'appui 48.2 de la première pièce 48 peut comprendre un chanfrein autour du trou traversant 48.1.

Le dispositif de fixation 52 comprend un corps tubulaire 54 traversant les première et deuxième pièces 48, 50, un écrou expansible 56 ainsi qu'une vis 58 se logeant dans le corps tubulaire et coopérant avec l'écrou expansible 56.

Selon un mode de réalisation visible sur les figures 4 à 6, le corps tubulaire 54 comprend une partie tubulaire 60 qui s'étend entre des première et deuxième extrémités 60.1, 60.2, une tête 62 qui s'étend entre des première et deuxième faces transversales 62.1, 62.2 (la deuxième extrémité 60.2 de la partie tubulaire 60 étant reliée à la deuxième face transversale 62.2) ainsi qu'un orifice traversant T60 qui débouche au niveau de la première extrémité 60.1 de la partie tubulaire 60 et de la première face transversale 62.1 de la tête 62.

Selon une configuration, la partie tubulaire 60 comporte une face latérale F60 cylindrique qui présente un diamètre sensiblement égal ou légèrement inférieur à ceux des trous traversants 48.1, 50.1 des première et deuxième pièces 48, 50. L'orifice traversant T60 est lisse.

La première extrémité 60.1 de la partie tubulaire 60 présente une forme tronconique qui s'évase en direction de la deuxième extrémité 60.2.

L'orifice traversant T60 comprend un élargissement, comme un chanfrein ou un lamage, au niveau de son extrémité débouchant au niveau de la première face transversale 62.1 de la tête 62.

Selon un mode de réalisation, la tête 62 comprend un premier tronçon 64.1 de section prismatique, notamment hexagonale, qui s'étend à partir de la première face transversale 62.1 ainsi qu'un deuxième tronçon 64.2, qui s'étend entre le premier tronçon 64.1 et la deuxième face transversale 62.2, de section circulaire et supérieure à celle du premier tronçon 64.1. Ce deuxième tronçon 64.2 forme une fausse rondelle. Cette dernière permet une meilleure répartition des efforts sur la première ou deuxième pièce 48, 50 et un meilleur maintien du dispositif de fixation dans un outil de pose. Bien entendu, l'invention n'est pas limitée à cette géométrie (hexagonale) pour la tête 62. Quel que soit le mode de réalisation, la tête 62 est configurée pour permettre de l'immobiliser en rotation ou de l'entraîner en rotation avec un outil.

En fonctionnement, la deuxième face transversale 62.2 de la tête 62 est configurée pour être plaquée contre la surface d'appui 48.2 de la première pièce 48. Le premier tronçon 64.1 est utilisé pour immobiliser en rotation le corps tubulaire 54 avec un outil.

Bien entendu, l'invention n'est pas limitée à ce mode de réalisation pour le corps tubulaire 54. Ce dernier pourrait être identique à ceux de l'art antérieur. Quel que soit le mode de réalisation, le corps tubulaire 54 est configuré pour se loger dans les trous traversants 48.1, 50.1 des première et deuxième pièces 48, 50. Il comprend une partie tubulaire 60 qui s'étend entre des première et deuxième extrémités 60.1, 60.2 et présente un axe de révolution A54, la première extrémité 60.1 coopérant avec l'écrou expansible 56 et comportant une forme évasée en direction de la deuxième extrémité 60.2, la deuxième extrémité 60.2 présentant une tête 62 configurée pour prendre appui contre la surface d'appui 48.2 de la première pièce 48.

L'écrou expansible 56 s'étend entre des première et deuxième extrémités 56.1, 56.2, la deuxième extrémité 56.2 étant en contact avec la première extrémité 60.1 de la partie tubulaire 60 du corps tubulaire 54 en fonctionnement. L'écrou expansible 56 comprend une face latérale 66 ainsi qu'un trou traversant 68 qui relie les première et deuxième extrémités 56.1, 56.2. L'écrou expansible 56 est configuré pour se déformer et s'expanser de manière à former un bulbe B56 (visible sur la figure7) lorsque l'écrou expansible 56 est soumis à un effort de compression entre ses première et deuxième extrémités 56.1, 56.2. En fonctionnement, le bulbe B56 prend appui contre la surface d'appui 50.2 de la deuxième pièce 50.

Avant déformation, la face latérale 66 présente un diamètre sensiblement égal à celui de la face latérale F60 du corps tubulaire 54.

Le trou traversant 68 présente un tronçon taraudé 68.1 qui s'étend à partir de la première extrémité 56.1 de l'écrou expansible 56.

A l'exception de sa face latérale 66, l'écrou expansible 56 peut être identique à ceux de l'art antérieur. Quel que soit le mode de réalisation, l'écrou expansible 56 s'étend entre des première et deuxième extrémités 56.1, 56.2 et comprend un trou traversant 68 qui débouche au niveau des première et deuxième extrémités 56.1, 56.2. Ce trou traversant 68 présente au moins un tronçon taraudé 68.1 et un axe de révolution A56. La deuxième extrémité 56.2 de l'écrou expansible 56 coopère avec la première extrémité 60.1 de la partie tubulaire 60 du corps tubulaire 54 en fonctionnement. L'écrou expansible 56 est configuré pour se déformer et s'expanser de manière à former un bulbe B56 lorsqu'il est soumis à un effort de compression entre ses première et deuxième extrémités 56.1, 56.2.

Selon une particularité de l'invention, l'écrou expansible 56 comprend au moins une forme configurée pour coopérer avec un outil afin d'immobiliser en rotation autour de son axe de révolution A56 l'écrou expansible 56 par rapport à l'outil. Selon un mode de réalisation, la face latérale 66 de l'écrou expansible 56 comprend au moins un méplat 70. Selon une configuration, la face latérale 66 comprend plusieurs méplats 70 régulièrement répartis autour de l'axe de révolution A56 de l'écrou expansible 56. A titre d'exemple, la face latérale 66 comprend six méplats. Bien entendu, l'invention n'est pas limitée à cette géométrie pour l'écrou expansible 56. Quel que soit le mode de réalisation, l'écrou expansible 56 est configuré pour coopérer avec un outil afin de l'immobiliser en rotation autour de son axe de révolution A56 par rapport à l'outil.

Selon un agencement, chaque méplat 70 est positionné à proximité de la première extrémité 56.1 de l'écrou expansible 56. Les méplats ont tous la même longueur (dimension prise selon une direction parallèle à l'axe de révolution A56 de l'écrou expansible 56) et sont positionnés entre deux plans transversaux.

La vis 58 comprend une tige 72 qui s'étend entre des première et deuxième extrémités 72.1, 72.2, une tête 74 de section hexagonale pour visser la vis 58, ainsi qu'une zone de jonction sécable 76 reliant la tige 72 et la tête 74. La tige 72 comprend un tronçon fileté 78, qui s'étend à partir de la première extrémité 72.1, configuré pour coopérer avec le tronçon taraudé 68.1 de l'écrou expansible 56 et s'y visser. La deuxième extrémité 72.2 de la tige 72 comprend une forme élargie 80 configurée pour prendre appui contre le corps tubulaire 54.

A l'exception de la première extrémité 72.1 de sa tige 72, la vis 58 pourrait être identique aux vis de l'art antérieur. Quel que soit le mode de réalisation, la tige 72 de la vis 58 s'étend entre des première et deuxième extrémités 72.1, 72.2 et présente un axe de révolution A72 ainsi qu'une face terminale F72, au niveau de sa première extrémité 72.1, sensiblement perpendiculaire à l'axe de révolution A72. La tige 72 comprend un tronçon fileté 78, qui s'étend à partir de la première extrémité 72.1, configuré pour coopérer avec le tronçon taraudé 68.1 de l'écrou expansible 56 et s'y visser, la deuxième extrémité 72.2 de la tige 72 comprenant une forme élargie 80 configurée pour prendre appui contre le corps tubulaire 54. Selon une particularité de l'invention, la vis 58 présente au moins une forme positionnée au niveau de la face terminale F72 et configurée pour coopérer avec un outil afin d'immobiliser en rotation autour de son axe de révolution A58 la vis 58 par rapport à l'outil. Selon un mode de réalisation, la tige 72 comprend une empreinte 82, coaxiale à l'axe de révolution A58 de la vis 58, qui débouche au niveau de la face terminale F72 et présente un fond 82.1 ainsi qu'une face latérale 82.2 reliant le fond 82.1 et la face terminale F72, la face latérale 82.2 comportant au moins un méplat. Selon un agencement, l'empreinte 82 comprend plusieurs méplats régulièrement répartis autour de l'axe de révolution A58 de la vis 58. Selon un agencement, l'empreinte 82 comprend six méplats et présente une section transversale hexagonale. Chaque méplat s'étend entre la face terminale F72 et le fond 82.1. Bien entendu, l'invention n'est pas limitée à cette géométrie pour l'empreinte 82. Quel que soit le mode de réalisation, la vis 58 est configurée pour coopérer avec un outil afin de l'immobiliser en rotation autour de son axe de révolution A58 par rapport à l'outil.

Selon un mode opératoire, le dispositif de fixation 52 est monté en utilisant sensiblement le même procédé de montage que pour les dispositifs de fixation de l'art antérieur visibles sur les figures 1 à 3

Ainsi, un procédé de montage comprend une étape d'insertion du dispositif dans les trous traversants 48.1, 50.1 des première et deuxième pièces 48, 50 à assembler depuis la surface d'appui 48.2 de la première pièce 48 jusqu'à ce que la tête 62 du corps tubulaire 54 soit en appui contre la surface d'appui 48.2 de la première pièce 48. La première extrémité 60.1 du corps tubulaire 54 est située en saillie par rapport à la surface d'appui 50.2 de la deuxième pièce 50.

En suivant, la vis 58 est vissée avec un premier outil, le corps tubulaire 54 étant immobilisé en rotation grâce à un deuxième outil qui coopère avec la tête 62 du corps tubulaire 54. Le deuxième tronçon 64.2 de la tête 62, qui forme une fausse rondelle, limite les risques d'endommagement de la première pièce 48 avec le deuxième outil.

Lors du vissage de la vis 58, l'écrou expansible 56 est comprimé entre ses première et deuxième extrémités 56.1, 56.2, sa deuxième extrémité 56.2 étant en contact avec la première extrémité 60.1 de la partie tubulaire 60 du corps tubulaire 54. Ce vissage provoque ainsi l'expansion de l'écrou expansible 56 qui forme alors un bulbe B56. Lorsque ce dernier est formé, le vissage provoque le plaquage du bulbe B56 contre la surface d'appui 50.2 de la deuxième pièce 50. Dès lors, les première et deuxième pièces 48 et 50 sont comprimées entre le bulbe B56 de l'écrou expansible 56 et la tête 62 du corps tubulaire 54. Dès qu'un couple de serrage souhaité est atteint, la zone de jonction sécable 76 de la vis 58 se rompt. Le dispositif de fixation 52 est alors correctement serré.

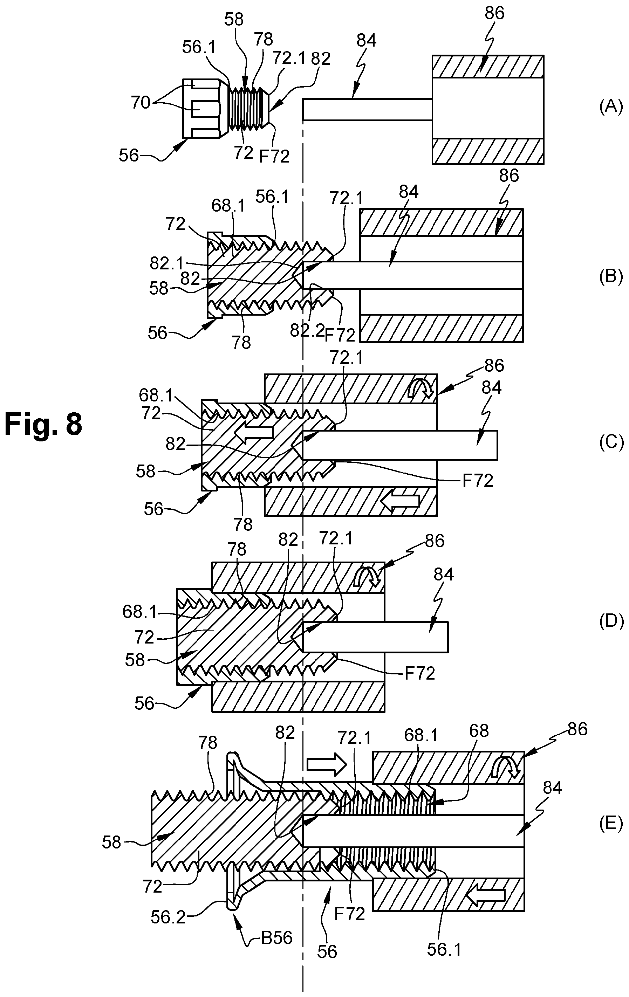

Un procédé de démontage du dispositif de fixation 52 est décrit au regard des figures 8 à 10. Ce procédé de démontage comprend une étape de dévissage d'un premier élément, parmi la vis 58 et l'écrou expansible 56, par rapport à un deuxième élément différent du premier élément, parmi la vis 58 et l'écrou expansible 56, en immobilisant en rotation le deuxième élément grâce à un premier outil et en faisant pivoter le premier élément grâce à un deuxième outil. Selon un mode opératoire, le corps tubulaire 54 peut être immobilisé préalablement à l'étape de dévissage pour débloquer l'écrou expansible 56.

Selon un mode de réalisation privilégié visible sur les figures 8 à 10, le procédé de démontage comprend une étape de dévissage de l'écrou expansible 56 par rapport à la vis 58 en immobilisant en rotation la vis 58 grâce au premier outil 84, qui coopère avec l'empreinte 82 de la vis 58, et en faisant pivoter l'écrou expansible 56 grâce au deuxième outil 86 qui coopère avec les méplats 70 de la face latérale 66 de l'écrou expansible 56. A titre d'exemple, le premier outil 84 est une clé mâle à six pans et le deuxième outil 86 est une clé à douille.

Selon un mode de réalisation, préalablement à l'étape de dévissage de l'écrou expansible 56 par rapport à la vis 58 ou au début de cette étape de dévissage, le procédé de démontage comprend une étape de déblocage de l'écrou expansible 56 par rapport au corps tubulaire 54 en immobilisant en rotation le corps tubulaire 54 grâce à un troisième outil 88, qui coopère avec le premier tronçon 64.1 de la tête 62 du corps tubulaire 54, et en faisant pivoter l'écrou expansible 56 grâce au deuxième outil 86. A titre d'exemple, le troisième outil 88 est une clé à douille. Cette étape de déblocage devient nécessaire si l'empreinte 82 de la vis 58 n'est pas suffisante pour débloquer l'écrou expansible 56 au début de l'étape de dévissage en raison des efforts de pression importants exercés par l'écrou expansible 56 sur le corps tubulaire 54.

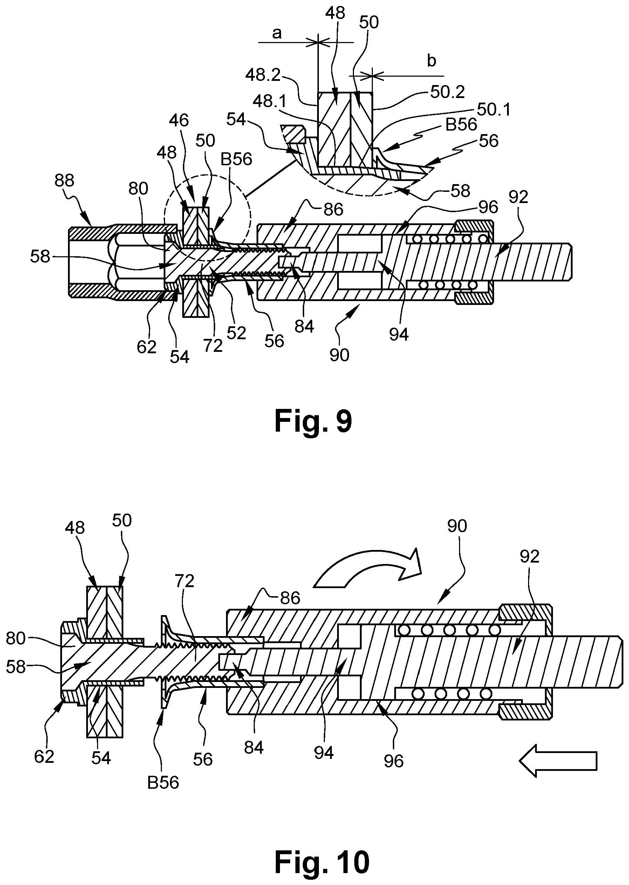

Comme illustré sur la figure 9, dans un premier temps, le troisième outil 88 est emmanché sur la tête 62 du corps tubulaire 54. En suivant, le premier outil 84 est inséré dans l'empreinte 82 de la vis 58, comme illustré sur la figure 9 et les parties (A) et (B) de la figure 8, et le deuxième outil 86 est emmanché sur l'écrou expansible 56 en le faisant coopérer avec les méplats 70, comme illustré sur les parties (C) et (D) de la figure 8. Le troisième outil 88 immobilisant en rotation le corps tubulaire 54, le deuxième outil 86 est alors mis en rotation, comme illustré sur la figure 9. Puis, l'écrou expansible 56 est dévissé avec le deuxième outil 86 en maintenant immobile en rotation la vis 58 grâce au premier outil 84, comme illustré sur la partie (D) de la figure 8 et la figure 10.

A l'issue de l'étape de dévissage, l'écrou expansible 56 est désolidarisé de la vis 58. Dès lors, le corps tubulaire 54 et la vis 58 peuvent être retirés des trous traversants 48.1, 50.1 des première et deuxième pièces 48, 50.

Ce mode opératoire ne génère aucun débris et permet de désolidariser de manière sûre le corps tubulaire 54 et l'écrou expansible 54.

Selon un mode de réalisation visible sur les figures 9 et 10, un même outillage 90 supporte les premier et deuxième outils 84, 86, l'outillage 90 comprenant un support 92, une liaison fixe 94 reliant le support 92 et le premier outil 84 ainsi qu'une liaison pivotante 96 qui relie le support 92 et le deuxième outil 86.

## Revendications

1. Dispositif de fixation permettant de maintenir assemblées au moins des première et deuxième pièces (48, 50) qui comportent chacune un trou traversant (48.1, 50.1) ainsi qu'une surface d'appui (48.2, 50.2) au niveau de laquelle débouche le trou traversant (48.1, 50.1), ledit dispositif de fixation comportant un corps tubulaire (54), un écrou expansible (56) ainsi qu'une vis (58) ; le corps tubulaire (54) étant configuré pour se loger dans les trous traversants (48.1, 50.1) des première et deuxième pièces (48, 50) et s'étendant entre des première et deuxième extrémités (60.1, 60.2), la première extrémité (60.1) du corps tubulaire (54) coopérant avec l'écrou expansible (56), la deuxième extrémité (60.2) du corps tubulaire (54) présentant une tête (62) configurée pour prendre appui contre la surface d'appui (48.2) de la première pièce (48) ; l'écrou expansible (56) s'étendant entre des première et deuxième extrémités (56.1, 56.2), présentant au moins un tronçon taraudé (68.1) et un axe de révolution (A56), l'écrou expansible (56) étant configuré pour s'expanser de manière à former un bulbe (B56) lorsqu'il est soumis à un effort de compression entre ses première et deuxième extrémités (56.1, 56.2) ; la vis (58) comportant une tige (72) qui s'étend entre des première et deuxième extrémités (72.1, 72.2) et présente un axe de révolution (A72) ainsi qu'une face terminale (F72) au niveau de sa première extrémité (72.1), la tige (72) comprenant un tronçon fileté (78) qui coopère avec le tronçon taraudé (68.1) de l'écrou expansible (56), la deuxième extrémité (72.2) de la tige (72) comprenant une forme élargie (80) prenant appui contre le corps tubulaire (54) ; **caractérisé en ce que** la vis (58) présente au moins une forme, au niveau de la face transversale (F72) de la tige (72), configurée pour coopérer avec un premier outil (84) afin d'immobiliser en rotation autour de son axe de révolution (A72) la vis (58) par rapport au premier outil (84) et **en ce que** l'écrou expansible (56) comprend au moins une forme configurée pour coopérer avec un deuxième outil (86) afin d'immobiliser en rotation autour de son axe de révolution (A56) l'écrou expansible (56) par rapport au deuxième outil (86).

2. Dispositif de fixation selon la revendication précédente, **caractérisé en ce que** l'écrou expansible (56) comprend une face latérale (66) reliant les première et deuxième extrémités (56.1, 56.2) de l'écrou expansible (56) ainsi qu'au moins un méplat (70) positionné sur la face latérale (66).

3. Dispositif de fixation selon la revendication précédente, **caractérisé en ce que** la face latérale (66) comprend plusieurs méplats (70) régulièrement répartis autour de l'axe de révolution (A56) de l'écrou expansible (56).

4. Dispositif de fixation selon l'une des revendications 2 à 3, **caractérisé en ce que** chaque méplat (70) est positionné à proximité de la première extrémité (56.1) de l'écrou expansible (56).

5. Dispositif de fixation selon l'une des revendications précédentes, **caractérisé en ce que** la tige (72) comprend une empreinte (82), coaxiale à l'axe de révolution (A58) de la vis (58), qui débouche au niveau de la face transversale (F72) et présente un fond (82.1) ainsi qu'une face latérale (82.2) reliant le fond (82.1) et la face transversale (F72), la face latérale (82.2) comportant au moins un méplat.

6. Dispositif de fixation selon la revendication précédente, **caractérisé en ce que** l'empreinte (82) comprend plusieurs méplats régulièrement répartis autour de l'axe de révolution (A58) de la vis (58).

7. Dispositif de fixation selon l'une des revendications précédentes, **caractérisé en ce que** la tête (62) est configurée pour permettre de l'immobiliser en rotation ou de l'entraîner en rotation avec un outil.

8. Dispositif de fixation selon la revendication précédente, **caractérisé en ce que** la tête (62) du corps tubulaire (54) s'étend entre des première et deuxième faces transversales (62.1, 62.2), la deuxième face transversale (62.2) étant configurée pour prendre appui contre la surface d'appui (48.2) de la première pièce (48) et **en ce que** la tête (62) comprend un premier tronçon (64.1) de section prismatique qui s'étend à partir de la première face transversale (62.1) ainsi qu'un deuxième tronçon (64.2) qui s'étend entre le premier tronçon (64.1) et la deuxième face transversale (62.2), de section supérieure à celle du premier tronçon (64.1).

9. Assemblage comportant au moins des première et deuxième pièces (48, 50) ainsi qu'au moins un dispositif de fixation selon l'une des revendications précédentes pour maintenir les première et deuxième pièces (48, 50) assemblées.

10. Procédé de démontage d'un dispositif de fixation selon l'une des revendications 1 à 8, **caractérisé en ce que** le procédé de démontage comprend une étape de dévissage d'un premier élément, parmi la vis (58) et l'écrou expansible (56), par rapport à un deuxième élément différent du premier élément, parmi la vis (58) et l'écrou expansible (56), en immobilisant en rotation le deuxième élément grâce à un premier outil (84) et en faisant pivoter le premier élément grâce à un deuxième outil (86).

11. Procédé de démontage selon la revendication précédente, **caractérisé en ce que** le procédé comprend une étape de dévissage de l'écrou expansible (56) par rapport à la vis (58) en immobilisant en rotation la vis (58) grâce au premier outil (84), qui coopère avec l'empreinte (82) de la vis (58), et en faisant pivoter l'écrou expansible (56) grâce au deuxième outil (86) qui coopère avec les méplats (70) de l'écrou expansible (56).

12. Procédé de démontage selon la revendication précédente, **caractérisé en ce que**, préalablement à l'étape de dévissage de l'écrou expansible (56) par rapport à la vis (58) ou au début de cette étape de dévissage, le procédé de démontage comprend une étape de déblocage de l'écrou expansible (56) par rapport au corps tubulaire (54) en immobilisant en rotation le corps tubulaire (54) grâce à un troisième outil (88) qui coopère avec la tête (62) du corps tubulaire (54) et en faisant pivoter l'écrou expansible (56) grâce au deuxième outil (86).

## Patentansprüche

1. Befestigungsvorrichtung, die es ermöglicht, wenigstens ein erstes und ein zweites Teil (48, 50) zusammenzuhalten, die jeweils ein Durchgangsloch (48.1, 50.1) sowie eine Auflagefläche (48.2, 50.2) aufweisen, in die das Durchgangsloch (48.1, 50.1) mündet, wobei die Befestigungsvorrichtung einen rohrförmigen Körper (54), eine aufweitbare Mutter (56) sowie eine Schraube (58) umfasst, wobei der rohrförmige Körper (54) so eingerichtet ist, dass er in die Durchgangslöcher (48.1, 50.1) des ersten und zweiten Teils (48, 50) passt und sich zwischen einem ersten und zweiten Ende (60.1, 60.2) erstreckt, wobei das erste Ende (60.1) des rohrförmigen Körpers (54) mit der aufweitbaren Mutter (56) zusammenwirkt, wobei das zweite Ende (60.2) des rohrförmigen Körpers (54) einen Kopf (62) aufweist, der so ausgebildet ist, dass er an der Auflagefläche (48.2) des ersten Teils (48) anliegt, wobei die aufweitbare Mutter (56) sich zwischen einem ersten und einem zweiten Ende (56.1, 56.2) erstreckt und wenigstens einem Gewindeabschnitt (68.1) und eine Rotationsachse (A56) aufweist, wobei die aufweitbare Mutter (56) so eingerichtet ist, dass sie sich ausweitet, um einen Wulst (B56) zu bilden, wenn sie einer Druckkraft zwischen ihrem ersten und zweiten Ende (56.1, 56.2) ausgesetzt ist, wobei die Schraube (58) einen Schaft (72) aufweist, der sich zwischen einem ersten und einem zweiten Ende (72.1, 72.2) erstreckt und eine Rotationsachse (A72) sowie eine Endfläche (F72) an seinem ersten Ende (72.1) aufweist, wobei der Schaft (72) einen Gewindeabschnitt (78) aufweist, der mit dem Gewindeabschnitt (68.1) der aufweitbaren Mutter (56) zusammenwirkt, und wobei das zweite Ende (72.2) des Schafts (72) eine erweiterte Form (80) aufweist, die sich gegen den rohrförmigen Körper (54) abstützt, **dadurch gekennzeichnet, dass** die Schraube (58) im Bereich der Querfläche (F72) des Schafts (72)wenigstens eine Form aufweist, die so eingerichtet ist, dass sie mit einem ersten Werkzeug (84) zusammenwirkt, um die Schraube (58) in Bezug auf das erste Werkzeug (84) gegen eine Drehung um ihre Drehachse (A72) zu sichern, und dass die aufweitbare Mutter (56) wenigstens eine Form umfasst, die so eingerichtet ist, dass sie mit einem zweiten Werkzeug (86) zusammenwirkt, um die aufweitbare Mutter (56) in Bezug auf das zweite Werkzeug (86) gegen eine Drehung um ihre Drehachse (A56) zu sichern.

2. Befestigungsvorrichtung nach dem vorhergehenden Anspruch, **dadurch gekennzeichnet, dass** die aufweitbare Mutter (56) eine Seitenfläche (66) aufweist, die das erste und zweite Ende (56.1, 56.2) der aufweitbaren Mutter (56) verbindet, sowie wenigstens eine Abflachung (70), die an der Seitenfläche (66) angeordnet ist.

3. Befestigungsvorrichtung nach dem vorhergehenden Anspruch, **dadurch gekennzeichnet, dass** die Seitenfläche (66) mehrere Abflachungen (70) umfasst, die gleichmäßig um die Drehachse (A56) der aufweitbaren Mutter (56) verteilt sind.

4. Befestigungsvorrichtung nach einem der Ansprüche 2 bis 3, **dadurch gekennzeichnet, dass** jede Abflachung (70) in der Nähe des ersten Endes (56.1) der aufweitbaren Mutter (56) angeordnet ist.

5. Befestigungsvorrichtung nach einem der vorhergehenden Ansprüche, **dadurch gekennzeichnet, dass** der Schaft (72) eine zur Rotationsachse (A58) der Schraube (58) koaxiale Vertiefung (82) aufweist, die im Bereich der Querfläche (F72) mündet und einen Boden (82.1) sowie eine Seitenfläche (82.2) umfasst, die den Boden (82.1) und die Querfläche (F72) verbindet, wobei die Seitenfläche (82.2) wenigstens eine Abflachung aufweist.

6. Befestigungsvorrichtung nach dem vorhergehenden Anspruch, **dadurch gekennzeichnet, dass** die Vertiefung (82) mehrere Abflachungen umfasst, die gleichmäßig um die Rotationsachse (A58) der Schraube (58) verteilt sind.

7. Befestigungsvorrichtung nach einem der vorhergehenden Ansprüche, **dadurch gekennzeichnet, dass** der Kopf (62) so ausgebildet ist, dass er mit einem Werkzeug gegen Drehung gesichert oder in Drehung versetzt werden kann.

8. Befestigungsvorrichtung nach dem vorhergehenden Anspruch, **dadurch gekennzeichnet, dass** sich der Kopf (62) des rohrförmigen Körpers (54) zwischen einer ersten und einer zweiten Querfläche (62.1, 62.2) erstreckt, wobei die zweite Querfläche (62.2) so ausgebildet ist, dass sie sich gegen die Auflagefläche (48.2) des ersten Teils (48) abstützt, und dass der Kopf (62) einen ersten Abschnitt (64.1) mit prismatischem Querschnitt aufweist, der sich von der ersten Querfläche (62.1) aus erstreckt, sowie einen zweiten Abschnitt (64.2), der sich zwischen dem ersten Abschnitt (64.1) und der zweiten Querfläche (62.2) erstreckt und dessen Querschnitt größer als der des ersten Abschnitts (64.1) ist.

9. Baugruppe mit wenigstens einem ersten und einem zweiten Teil (48, 50) sowie wenigstens einer Befestigungsvorrichtung nach einem der vorhergehenden Ansprüche zum Halten der zusammengebauten ersten und zweiten Teile (48, 50).

10. Verfahren zum Zerlegen einer Befestigungsvorrichtung nach einem der Ansprüche 1 bis 8, **dadurch gekennzeichnet, dass** das Verfahren zum Zerlegen einen Schritt des Abschraubens eines ersten Elements aus Schraube (58) und aufweitbare Mutter (56) in Bezug auf ein zweites, vom ersten Element verschiedenes Element aus Schraube (58) und aufweitbare Mutter (56) umfasst, indem das zweite Element durch ein erstes Werkzeug (84) gegen Drehung gesichert wird und das erste Element durch ein zweites Werkzeug (86) gedreht wird.

11. Verfahren zum Zerlegen nach dem vorhergehenden Anspruch, **dadurch gekennzeichnet, dass** das Verfahren einen Schritt des Abschraubens der aufweitbaren Mutter (56) von der Schraube (58) umfasst, indem die Schraube (58) durch das erste Werkzeug (84), das mit der Vertiefung (82) der Schraube (58) zusammenwirkt, gegen Drehung gesichert wird und die aufweitbare Mutter (56) durch das zweite Werkzeug (86), das mit den Abflachungen (70) der aufweitbaren Mutter (56) zusammenwirkt, gedreht wird.

12. Verfahren zum Zerlegen nach dem vorhergehenden Anspruch, **dadurch gekennzeichnet, dass** vor dem Schritt des Abschraubens der aufweitbaren Mutter (56) in Bezug auf die Schraube (58) oder zu Beginn dieses Schritts des Abschraubens, das Verfahren zum Zerlegen einen Schritt zum Lösen der aufweitbaren Mutter (56) in Bezug auf den rohrförmigen Körper (54) umfasst, indem der rohrförmige Körper (54) mittels eines dritten Werkzeugs (88), das mit dem Kopf (62) des rohrförmigen Körpers (54) zusammenwirkt, gegen Drehung gesichert wird und indem die aufweitbare Mutter (56) mittels des zweiten Werkzeugs (86) gedreht wird.

## Claims

1. Fastening device for keeping at least first and second parts (48, 50) assembled, each of which has a through-hole (48.1, 50.1) and a bearing surface (48.2, 50.2) into which the through-hole (48.1, 50.1) opens, said fastening device comprising a tubular body (54), an expansion nut (56) and a screw (58); the tubular body (54) being designed to be seated in the through-holes (48.1, 50.1) of the first and second parts (48, 50) and extending between first and second ends (60.1, 60.2), the first end (60.1) of the tubular body (54) cooperating with the expansion nut (56), the second end (60.2) of the tubular body (54) having a head (62) designed to bear against the bearing surface (48.2) of the first part (48); the expansion nut (56) extending between first and second ends (56.1, 56.2), having at least one threaded section (68.1) and an axis of revolution (A56), the expansion nut (56) being designed to expand to form a bulb (B56) when subjected to a compressive force between the first and second ends (56.1, 56.2) thereof; the screw (58) having a shank (72) that extends between first and second ends (72.1, 72.2) and has an axis of revolution (A72) and an end face (F72) at the first end (72.1) thereof, the shank (72) comprising a threaded section (78) which cooperates with the threaded section (68.1) of the expansion nut (56), the second end (72.2) of the shank (72) having an enlarged shape (80) bearing against the tubular body (54); wherein the screw (58) has at least one shape, on the transverse face (F72) of the shank (72), designed to cooperate with a first tool (84) to prevent the screw (58) from rotating about the axis of revolution (A72) thereof with respect to the first tool (84), and wherein the expansion nut (56) has at least one shape designed to cooperate with a second tool (86) to prevent the expansion nut (56) from rotating about the axis of revolution (A56) thereof with respect to the second tool (86).

2. Fastening device as claimed in the preceding claim, wherein the expansion nut (56) comprises a lateral face (66) connecting the first and second ends (56.1, 56.2) of the expansion nut (56), as well as at least one flat (70) positioned on the lateral face (66).

3. Fastening device as claimed in the preceding claim, wherein the lateral face (66) comprises several flats (70) regularly distributed about the axis of revolution (A56) of the expansion nut (56).

4. Fastening device as claimed in one of claims 2 and 3, wherein each flat (70) is positioned close to the first end (56.1) of the expansion nut (56).

5. Fastening device as claimed in one of the preceding claims, wherein the shank (72) comprises a recess (82), coaxial with the axis of revolution (A58) of the screw (58), which opens into the transverse face (F72) and has a bottom (82.1) and a lateral face (82.2) connecting the bottom (82.1) and the transverse face (F72), the lateral face (82.2) having at least one flat.

6. Fastening device as claimed in the preceding claim, wherein the recess (82) comprises several flats regularly distributed about the axis of revolution (A58) of the screw (58).

7. Fastening device as claimed in one of the preceding claims, wherein the head (62) is designed to allow it to be prevented from rotating or to be driven in rotation using a tool.

8. Fastening device as claimed in the preceding claim, wherein the head (62) of the tubular body (54) extends between first and second transverse faces (62.1, 62.2), the second transverse face (62.2) being designed to bear against the bearing surface (48.2) of the first part (48), and wherein the head (62) comprises a first section (64.1) of prismatic cross-section which extends from the first transverse face (62.1) and a second section (64.2) which extends between the first section (64.1) and the second transverse face (62.2), which is larger in cross-section than the first section (64.1).

9. Assembly comprising at least first and second parts (48, 50) and at least one fastening device as claimed in one of the preceding claims for keeping the first and second parts (48, 50) assembled.

10. Method for removing a fastening device as claimed in one of claims 1 to 8, wherein the removal method comprises a step of unscrewing a first element, which is either the screw (58) or the expansion nut (56), with respect to a second element, which is different from the first element and is either the screw (58) or the expansion nut (56), by preventing the second element from rotating using a first tool (84) and pivoting the first element using a second tool (86).

11. Removal method as claimed in the preceding claim, wherein the method comprises a step of unscrewing the expansion nut (56) with respect to the screw (58) by preventing the screw (58) from rotating using the first tool (84), which cooperates with the recess (82) in the screw (58), and pivoting the expansion nut (56) using the second tool (86), which cooperates with the flats (70) of the expansion nut (56).

12. Removal method as claimed in the preceding claim, wherein, before the step of unscrewing the expansion nut (56) with respect to the screw (58) or at the beginning of this unscrewing step, the removal method comprises a step of unlocking the expansion nut (56) with respect to the tubular body (54) by preventing the tubular body (54) from rotating using a third tool (88), which cooperates with the head (62) of the tubular body (54), and pivoting the expansion nut (56) using the second tool (86).
